# EUROPEAN PATENT APPLICATION

(11) **EP 4 517 891 A1**
(43) Date of publication of application: **05.03.2025**
(21) Application number: 23194125.3
(22) Date of filing: 30.08.2023
(51) Int. Cl.: H01M 10/04

(54) **BATTERY MANUFACTURING METHOD AND SYSTEM**

(71) Applicant: LG ENERGY SOLUTION, LTD., Seoul 07335 (KR)
(72) Inventor: MOON, Jun Ho, 34122 Daejeon (KR); JIN, Chul Gyu, 34122 Daejeon (KR); CHOI, Jong Hyouk, 34122 Daejeon (KR); JUNG, Jae Sun, 34122 Daejeon (KR); KIM, Su Hong, 34122 Daejeon (KR); HAN, Nam Ju, 34122 Daejeon (KR); SHIN, Jae Won, 34122 Daejeon (KR)
(74) Representative: Goddar, Heinz J.

(57) **Abstract**

Disclosed is a battery manufacturing method. A battery part is conveyed between a first roller and a second roller while pressing the first roller against the second roller and/or while pressing the second roller against the first roller. During the conveying, an indicator of a thickness profile of the battery part between the first roller and the second roller is determined. An arrangement of the first roller and/or the second roller is controlled according to the indicator.

## Description

### BACKGROUND AND TECHNICAL PROBLEM

The present invention relates a battery manufacturing method and a battery manufacturing system. In particular, the present invention relates to a method and a system of manufacturing a secondary battery.

In a battery manufacturing process, a material may be deposited on a substrate, particularly an electrode active material mixture on a conductive electrode foil. It may be desirable to obtain a thickness profile of the deposited material that is within a target thickness range. Further, it may be desirable to obtain a uniform thickness profile of the deposited material. Particularly, depending on design configurations, it may be desirable to obtain a uniform thickness profile of a material deposited on an electrode. Furthermore, it may be desirable to reduce material loss incurred during the battery manufacturing process. In view of this, a technical problem may include increasing an accuracy of generating a specific thickness profile. Further technical problems may include achieving a uniform thickness profile over an electrode and minimizing material loss.

### SUMMARY OF THE INVENTION

The technical problems known from the prior art are solved by the subject matter as defined by the features of the independent claims. Particular embodiments of the invention are given by the features of the dependent claims. In the following, embodiments of the invention are introduced, and their features are described in detail. Any, some or all of the embodiments can be combined with one another unless indicated otherwise or technically inappropriate.

According to an aspect, a method of manufacturing a battery is disclosed. The method comprises the following method steps: conveying a battery part between a first roller and a second roller while pressing the first roller against the second roller and/or while pressing the second roller against the first roller; during the conveying, determining an indicator of a thickness profile of the battery part between the first roller and the second roller; and controlling an arrangement of the first roller and/or the second roller according to the indicator.

According to an aspect, a battery manufacturing system is disclosed. The battery manufacturing system comprises one or more of: a first roller, a second roller, a transport device, a sensor and a controller. The first roller may be rotatable around a first rotation axis. The second roller may be rotatable around a second rotation axis. The first roller and the second roller may be arranged such that the first rotation axis and the second rotation axis are inclined from each other within a threshold inclination. The first roller may be configured to be pressed against the second roller and/or the second roller may be configured to be pressed against the first roller. The transport device may be configured to convey a battery part between the first roller and the second roller. The sensor may be configured to determine an indicator of a thickness profile of the battery part between the first roller and the second roller. The controller may be configured to control an arrangement of the first roller and/or the second roller according to the indicator.

The battery manufacturing system may be capable of carrying out the battery manufacturing method as disclosed herein. Additionally or alternatively, the battery manufacturing system may be capable of carrying out any, some or all of the examples and features of the battery manufacturing method as disclosed herein. The battery manufacturing method may be implemented to be carried out through the battery manufacturing system as disclosed herein.

The battery manufacturing method may include any, some or all of the features of the battery manufacturing system as disclosed herein unless indicated otherwise or technically inappropriate. Thus, the components mentioned in the battery manufacturing method may correspond to the respective ones of the battery manufacturing system and possibly vice versa. Where a component of the battery manufacturing system is "configured to" perform a task, this may be interpreted as a step of the battery manufacturing method of performing the same task.

Further, where a particular expression, term or component is described using optional features and examples in the following, these optional features and examples may be combined with any, some or all of the optional features and examples of any other expression, term or component, unless indicated otherwise or technically inappropriate.

Hereinafter, the term "battery manufacturing system" may be shortened to "the system" for brevity. Hereinafter, the term "battery manufacturing method" may be shortened to "the method" for brevity. The method and the system as described herein may be configured to operate and carried out, respectively, in an industrialized production process.

As to the technical effect, the method and the system as disclosed herein may allow for controlling a thickness profile of the battery part in real-time while the battery part is being conveyed between two pressure rollers. In particular, the method and the system may allow for manipulating the thickness profile of the battery part by controlling the arrangement, which may encompass an inclination and/or a displacement of the first roller and the second roller relative to each other. The method and the system may contribute to increasing uniformity of the thickness profile of the battery part. The method and/or system may contribute to minimizing the undesired material loss. The method and/or system may contribute to increasing the efficiency of the manufacturing of a battery part.

According to an aspect, an automated plant is disclosed. The automated plant may comprise the battery manufacturing system as disclosed herein. Additionally or alternatively, the automated plant may be configured to execute the battery manufacturing method as disclosed herein. The automated plant may be, include or implement any of the examples and optional features of the battery manufacturing system and/or the battery manufacturing method as disclosed herein. The automated plant may be capable of carrying out the battery manufacturing method as disclosed herein. Additionally or alternatively, the automated plant may be capable of carrying out any, some or all of the examples and features of the battery manufacturing method as disclosed herein. The battery manufacturing method may be implemented so as to be carried out through the automated plant as disclosed herein.

The automated plant may be or include a smart factory, in which the battery manufacturing system as disclosed herein is implemented. The examples and optional features of the manufacturing system as disclosed herein may also apply to the smart factory. The term "smart factory" is used herein as commonly understood in the field of industrial processing, particularly in the fields of automation, Internet of Things, artificial intelligence, big data analytics, cloud computing and robotics. In particular, the smart factory may be understood in connection with the Industry 4.0 paradigm. The smart factory as used herein may also be referred to as a digital factory or intelligent factory and may indicate an advanced manufacturing facility that utilizes various digital technologies, automation, and data exchange in production processes.

Herein, the term "battery" may be used in accordance with the teachings of electrochemical energy storage. The battery may refer to a primary battery and/or a secondary battery. Specifically, a battery as used herein may indicate a product that is configured to store chemical energy and enables a conversion of the stored chemical energy into electrical energy. In some examples, the battery may explicitly refer to a secondary battery that is rechargeable.

Herein, a battery part may refer to any part of a battery as defined herein, particularly a part of a secondary battery. Specifically, the battery part may refer to a part of a battery during a battery manufacturing process. The battery part may be a part to be used in a battery or a workpiece that is to be processed to a battery. The battery part may comprise at least one electrochemical cell having a positive electrode, a negative electrode, a separator therebetween and an electrolyte. In a specific example, the battery part may include an electrode sheet that comprises an electrode substrate and an electrode active material mixture (shortly "active material" hereinafter, unless indicated otherwise) disposed thereon. For example, the active material maybe deposited, applied, sprayed and/or coated on the electrode substrate. The electrode substrate may be a conductive foil comprising a metallic material, such as copper, nickel, or aluminum. Without loss of generality, the battery part as used herein may refer to a pouch-type battery cell, a prismatic battery cell or a cylindrical battery cell.

The method may comprise conveying a battery part between a first roller and a second roller. Herein, conveying the battery part may refer to a process of, for example, moving, transporting and/or forwarding the battery part from one position to another position. The method, particularly the conveying of the battery part between the first roller and the second roller, may include moving, transporting and/or forwarding the battery part from an initial position away from the first roller and the second roller to a position between the first roller and the second roller. The method, particularly the conveying, may include passing the battery part between and past the first roller and the second roller. The method, particularly the conveying, may further include moving, transporting, and/or forwarding the battery part to further rollers after being conveyed between the first and second rollers.

A transport device may be configured to convey the battery part between the first roller and the second roller. The transport device may comprise an unwinder that supplies the battery part from a roll. In a specific example, the battery part may include an electrode sheet, which may be provided wound up on a roll. The transport device, or its unwinder, may (be configured to) unwind the electrode sheet from the roll and convey it toward and between the first and second rollers. In a further specific example, a coater device may deposit an active material mixture onto the electrode sheet. Accordingly, in the method and/or the system disclosed herein, the active material mixture and the electrode sheet may be pressed together between the first roller and the second roller.

Additionally or alternatively, the transport device may comprise a rewinder arranged in a position downstream of the first roller and the second roller in terms of the processing of the battery part. The rewinder may (be configured to) wind up the battery part, if provided as a continuous sheet with a material deposited thereon, on a roll. Additionally or alternatively, the transport device may comprise one or more tension rollers to support the battery part in the system or while executing the method as disclosed herein. At least one of the tension rollers may be an idle roller. At least one of the tension rollers may be drive rollers.

Optionally, the transport device may comprise any proper means for transporting the battery part as known in the industrial processing. For example, the transport device may comprise any of: one or more conveyor belts, a set of conveyor rollers, one or more conveyor chains and one or more robotic manipulators.

The first roller may have a cylindrical shape, without being limited thereto. The first roller may be provided as a press roll. The first roller may be configured to rotate around a first rotation axis. The first roller may be configured to be moved toward or away from the second roller. Additionally or alternatively, a (first) pressing force may be applied onto the first roller toward (against) the second roller, and the method may comprise controlling the pressing force and/or the system may be configured to control the pressing force. In particular, the first roller may extend along the rotation axis between two end faces, and may be configured such that the two end faces of the first roller can be moved toward or away from the second roller in an individual manner, i.e., independently from each other.

The second roller may have a cylindrical shape, without being limited thereto. The second roller may be provided as a press roll. The second roller may be configured to rotate around a second rotation axis. The second roller may be configured to be moved toward or away from the first roller. Additionally or alternatively, a (second) pressing force may be applied onto the second roller toward (against) the first roller, and the method may comprise controlling the pressing force and/or the system may be configured to control the pressing force. In particular, the second roller may extend along the rotation axis between two end faces, and may be configured such that the two end faces of the second roller can be moved toward or away from the first roller in an individual manner, i.e., independently from each other. Unless indicated otherwise and technically inappropriate, the second roller may include or implement any, some or each of the optional features of the first roller.

In the method and/or the system, the first roller and the second roller may be arranged in any suitable orientation in terms of the gravitation. For example, the second roller may be arranged over the first roller in terms of the gravitation. In particular, the first roller and the second roller may be arranged such that their rotation axes are perpendicular to a process direction of the battery part and substantially perpendicular to the gravitation.

The first roller and the second roller may be arranged such that the first rotation axis and the second rotation axis are inclined from each other within a threshold inclination. The threshold inclination may be between 0 and 45 degrees, or between 0 and 20 degrees, or between 0 and 10 degrees, or between 0 and 5 degrees, or between 0 and 3 degrees, or between 0 and 1 degree. Generally, it may be beneficial that the threshold inclination be as small as possible. An inclination of the first and second rollers being below 10 degrees may be considered such that the first roller and the second roller are arranged substantially parallel to each other. At the same time, practical aspects of the battery manufacturing may result that the threshold inclination be non-zero.

The first roller may be (configured to be) pressed against the second roller, additionally or alternatively to being moved toward the second roller. Specifically, a pressing force may be applied to the first roller toward the second roller. More specifically, two or more pressing forces may be applied to respective force application points at the first roller toward the second roller. The second roller may be (configured to be) pressed against the first roller, additionally or alternatively to being moved toward the first roller. Specifically, a pressing force may be applied to the second roller toward the first roller. More specifically, two or more pressing forces may be applied to respective force application points at the second roller toward the first roller.

The first roller and the second roller may be both (configured to be) pressed against the respective other one. Alternatively, one of the first roller and the second roller may be stationary and the other one of the first roller and the second roller may be pressed toward it. The battery part being conveyed between the first roller and the second roller may be pressed accordingly. Hence, the first roller and/or the second roller may be each referred to as a press roller.

In a battery manufacturing system or a battery manufacturing method, an electrode active material mixture may be deposited on an electrode substrate. Then the deposited material and the electrode substrate may be pressed together mechanically. In the method and system disclosed herein, the first and second rollers may be used for mechanically pressing together the battery part, which may include a deposited active material and an electrode substrate.

While being conveyed (and passing) between the first roller and the second roller, the battery part is pressed on both sides by the first roller and the second roller. Here, one or both of the first roller and the second roller may be pressed against the respective other, either actively or by as a reaction to an actively exerted pressing force (e.g., according to the Newton's third law of motion).

While and/or after conveying (passing) the battery part between the first roller and the second roller, a thickness of the battery part, Specifically the electrode sheet, may be the same as or smaller than before passing between the same. The number of rollers is not limited and additional rollers may be arranged, such as a third roller and a fourth roller.

Herein, the thickness profile of the battery part may refer to a spatial distribution of the thickness of the battery part in a plane parallel to a thickness direction and a width direction of the battery part. Herein, the thickness direction may be perpendicular to a main surface of the battery part. The thickness direction of the battery part may be further perpendicular to a processing direction, in which the battery part is conveyed. The width direction of the battery part may be perpendicular to the thickness direction. The width direction of the battery part may be further perpendicular to the processing direction. The width direction of the battery part may be parallel to a main surface of the battery part. The width direction of the battery part may be parallel to one or both of the rotation axes of the first roller and the second roller. The processing direction of the battery part may be perpendicular to the thickness direction and to the width direction.

In specific examples, the thickness profile of the battery part may encompass a thickness of a material, such as an active material, deposited on a substrate, such as an electrode sheet as well as a thickness of the substrate. In other examples, the thickness profile of the battery part may substantially refer to the thickness of the active material deposited on the substrate.

It may be desirable to obtain a thickness profile of the battery part that is within a target thickness range. In particular, it may be desirable that a difference of the thickness profile of the battery part from a reference thickness profile is below a threshold. Also, it may be desirable to obtain a thickness profile of the battery part that is uniformly distributed, i.e., such that the thickness of the battery part remains constant along the width direction.

The method as disclosed herein may comprise determining an indicator of the thickness profile of the battery part between the first roller and the second roller. The system as disclosed herein may comprise a sensor configured to determine an indicator of a thickness profile of the battery part between the first roller and the second roller.

The indicator of the thickness profile of the battery part may be provided as machine-readable data. The indicator may contain parameterized data about the thickness profile of the battery part. The indicator may be, comprise or computed from one or more parameters. In particular, the indicator may comprise a value, a set of values or a data set that are computed from measured parameters.

Specifically, the indicator may be, comprise or computed from two or more parameters that are each measured at a respective measurement point of two or more measurement points. In specific examples, the determining of the indicator may include parametrizing an axial length (i.e., spatial extension along a direction parallel to the respective rotation axis) of the first roller and/or the second roller. Two or more parameters may be measured at different measurement points along the axial length of the first roller and/or the second roller. The indicator may be computed by linking the measured parameters with the respective measurement points in terms of the parametrized axial length of the first roller and/or the second roller. Additionally or alternatively, the indicator may include an interpolation and/or an extrapolation of the parameter over the entire axial length of the first roller and/or the second roller.

The indicator may be determined from a gap distance between the first roller and the second roller. Alternatively or additionally, the indicator may be determined from a displacement (offset) of the first roller from a reference position. The sensor may be configured to determine, particularly to physically measure, the gap distance and/or the displacement. As discussed in detail below, the indicator may be or include one or more parameters measured at different measurement points, wherein each of the parameters may be a gap distance value or a displacement value. The same may apply accordingly with respect to the second roller.

The gap distance may be measured in a plane including the rotation axes of the first roller and the second roller. The gap distance may be measured within a gap (void, cavity, hollow) formed between the first roller and the second roller. The gap distance may depend on the measurement position and two or more gap distance values may be measured as a respective parameter, as described herein.

The reference position may correspond to an initial arrangement of the first roller and the second roller without the battery part therebetween. Additionally or alternatively, the reference position may correspond to the first roller and the second roller being in contact with each other. The displacement may depend on the measurement position and two or more displacement values may be measured as a respective parameter, as described herein.

Additionally or alternatively, the indicator may be determined from a load (i.e., pressure and/or pressing force) acting on the first roller and/or the second roller. The indicator may be or include information about a change of the load from a reference load value. The sensor may be configured to determine, particularly to physically measure, a load acting on the first roller in a direction opposite to the second roller and/or a load acting on the second roller in a direction opposite to the first roller. The load may encompass a reaction force exerted by the battery part. Additionally, the load may encompass a rection force exerted by the first roller or the second roller in response to being pressed by the respective other one. As discussed in detail below, the indicator may be or include multiple load values (i.e., multiple parameters) measured at different measurement points.

The sensor as disclosed herein may comprise, or have access to, a processor and a memory to determine the indicator from one or more measured parameters, such as the gap distance, the displacement and/or the load as mentioned above. Additionally or alternatively, the sensor may be configured to transmit the indicator to the controller, a server, a memory and/or an output device.

The term "determining" as used herein may include a process or steps of, for example, measuring, receiving signals, retrieving data and/or computing. For example, the determining may include parameterizing the axial length of the first roller and/or the second roller as described above. Furthermore, the determining may include quantification or digitalization of a measured value, linking a measured value with a respective position in terms of the parameterized axial length of the first roller or the second roller, interpolation and/or extrapolation over the entire axial length of the first roller or the second roller.

The determining of the indicator may be performed during the conveying. Specifically, the determining of the indicator may be performed in real-time while the battery part in real-time while passing between the first roller and the second roller. In other words, the determining of the indicator may be performed in real-time while the battery part is being pressed between the first roller and/or the second roller. Yet, the determining of the indicator may be delayed due to computational and signal processing limitations.

The method may comprise controlling an arrangement of the first roller and/or the second roller. The system may comprise a controller configured to control the arrangement of the first roller and/or the second roller according to the indicator. Furthermore, the controller may be configured to perform any machine-executed instruction as described herein.

The arrangement of the first roller and/or the second roller may generally refer to positioning and alignment of the first roller and the second roller relative to each other. In particular, the arrangement may encompass an inclination of the first roller and the second roller relative to each other. Specifically, the arrangement may include an inclination between the rotation axes (i.e., between the first rotation axis of the first roller and the second rotation axis of the second roller). Unless otherwise indicated, the first roller and the second roller are arranged such that the first rotation axis and the second rotation axis are in a same plane (i.e., coplanar).

Additionally or alternatively, the arrangement may encompass a displacement of the first roller and/or the second roller from an initial position. In particular, the arrangement may comprise two or more displacement parameters between the first roller and the second roller at different control positions distributed along the axial length of the first roller and/or the second roller. The control positions may correspond to the measurement positions as disclosed herein. The inclination and the general gap distance between the first roller and the second roller may be controlled by individually controlling the two or more displacement parameters.

The controlling of the arrangement may comprise regulating, adjusting, maintaining, increasing and/or decreasing the arrangement of the first roller and/or the second roller. The controlling of the arrangement may comprise applying an external force on the first roller toward or away from the second roller. The controlling of the arrangement may comprise controlling the pressing force (see above) acting on the first roller toward the second roller. In particular, the controlling of the arrangement may comprise individually controlling the pressing forces (see above) applied to different force application points at the first roller (i.e., control points).

Alternatively or additionally, the controlling may comprise applying an external force on the second roller toward or away from the first roller. The controlling of the arrangement may comprise controlling the pressing force (see above) acting on the second roller toward the first roller. In particular, the controlling of the arrangement may comprise individually controlling the pressing forces (see above) applied to different force application points at the second roller (i.e., control points).

The system may comprise one or more actuators configured to apply the pressing force to the first roller or to apply the pressing forces to the force application points at the first roller. Alternatively or additionally, the system may comprise one or more actuators configured to apply the pressing force to the second roller or to apply the pressing forces to the force application points at the second roller. For example, each of the one or more actuators may be or comprise a hydraulic pressing device, a pneumatic pressing device, an electromotor or a screw rotor.

The controlling of the arrangement being performed "according to the indicator" may indicate that the arrangement is controlled so as to change the indicator in a desired manner. As described above, the indicator may contain information about the thickness profile of the battery part. In particular, the indicator may show that the thickness profile of the battery part is outside of a target thickness range and/or outside of a threshold from a target thickness profile. If so, the arrangement may be controlled so as to change the indicator in a manner that the thickness profile of the battery part is in conformity with the target thickness and/or the target thickness profile. Consequently, the controlling of the arrangement may be performed manually by a user and/or automatically as a loop with the indicator as an input.

Specifically, the controlling of the arrangement may be performed in real-time, i.e., while the battery part is being conveyed between the first roller and the second roller. Consequently, the method and system disclosed herein are capable of controlling the thickness profile of the battery part and monitoring the same in real-time while the battery part is being pressed between the first roller and the second roller.

In some examples, the indicator is or comprises or is determined from a reaction force exerted by the battery part on the first roller in response to being pressed by the first roller and/or the second roller.

The reaction force is used herein in accordance with Newton's third law of motion. The reaction force may indicate a force that a first object experiences in response to applying an action force to a second object. The reaction force may have a same magnitude and an opposite direction as the action force. The reaction force may also be referred to as reactive force.

With the first roller and/or the second roller pressing against the battery part while it is conveyed therebetween, the battery part may exert a reaction force on the first roller and/or the second roller in a respectively opposite direction. In other words, the battery part displaces the first roller and/or the second roller through its spatial extension in the thickness direction. The reaction force exerted by the battery part may vary depending on the thickness profile of the battery part. Hence, the reaction force may be used as the indicator of the thickness profile of the battery part for controlling the arrangement of the first roller and/or the second roller.

As described above, the indicator of the thickness profile of the battery part may be determined from one or more load values. In these specific examples, the arrangement of the first roller and/or the second roller may be controlled so as to bring the measured load value(s) toward or into a (respective) target load range or to maintain the measured load value(s) within the (respective) target load range. For this purpose, the currently measured load value(s) may be used as an input in a feed loop for the controlling the arrangement.

Consequently, the method and system may implement a real-time determination of the thickness profile of the battery part in order to accurately control the arrangement of the first roller and/or the second roller in the above-described manner.

In some examples, the indicator is or comprises or is determined from a gap distance of the first roller from the second roller and/or a displacement of the first roller relative to the second roller. In addition, the method may include measuring a gap distance of the first roller from the second roller and/or a displacement of the first roller relative to the second roller. The system may include a gap distance measurement device and/or a displacement measurement device. The gap distance and the displacement may be used as described above.

As described above, the indicator of the thickness profile of the battery part may be determined from one or more gap distance values. In these specific examples, the arrangement of the first roller and/or the second roller may be controlled so as to bring the measured gap distance value(s) toward or into a (respective) target gap distance range or to maintain the measured gap distance value(s) within the (respective) target gap distance range. For this purpose, the currently measured gap distance value(s) may be used as an input in a feed loop for the controlling the arrangement.

Alternatively or additionally, the indicator of the thickness profile of the battery part may be determined from one or more displacement values. In these specific examples, the arrangement of the first roller and/or the second roller may be controlled so as to bring the measured displacement value(s) toward or into a (respective) target displacement range or to maintain the measured displacement value(s) within the (respective) target displacement range. For this purpose, the currently measured displacement value(s) may be used as an input in a feed loop for the controlling the arrangement.

The gap distance measurement device may be any suitable device capable of measuring the gap distance between the first roller and the second roller. For example, the gap distance measurement device may be configured to measure the gap distance optically and/or physically.

The displacement measurement device may be any suitable device capable of measuring the displace of the first roller relative to the second roller or vice versa. For example, the displacement measurement device may be configured to measure the displacement optically or physically, or by means of a pneumatic, hydraulic or electric gauge configured to indicate the displacement. In a specific context, the displacement measurement device may be combined with a load cell.

Consequently, the method and system may implement a real-time determination of the thickness profile of the battery part in order to accurately control the arrangement of the first roller and/or the second roller in the above-described manner.

In some examples, the system, or the sensor thereof, may further comprise a load cell configured to monitor a reaction force exerted by the battery part on the first roller as a reaction to being pressed by the first roller and/or the second roller. The load cell may be arranged on a side of the first roller opposite to the second roller.

Alternatively or additionally, the load cell may be configured to monitor a reaction force exerted by the battery part on the second roller as a reaction to being pressed by the first roller and/or the second roller. The load cell may be arranged on a side of the second roller opposite to the first roller.

The reaction force monitored by the load cell may be the reaction force as described above. The load cell is used herein in accordance with the common understanding from the fields of mechanical and electrical engineering. The load cell may be configured to convert a physical force such as pressure, tension, compression or torque into an electrical signal that can be measured and standardized (quantified). The load cell may be a force transducer. For example, the electrical signal generated by the load cell may change proportionally as the force applied to the load cell increases. Examples of the load cell may include a pneumatic gauge, a hydraulic gauge and a strain gauge.

Consequently, the method and system may implement a real-time monitoring of the thickness profile of the battery part and a real-time control of the arrangement of the first roller and/or the second roller as a function thereof.

As generally indicated above, the optional features of different components as described herein may be implemented in combination unless indicated otherwise or technically inappropriate. The system or the method as disclosed herein may implement one or more load cells as described in combination with one or more displacement measurement devices as described.

In some examples, the method further comprises determining a first parameter at a first measurement point and a second parameter at a second measurement point. The first measurement point and the second measurement point are spaced apart from each other. The indicator is determined from the first parameter and/or the second parameter.

The measurement points may be spaced apart in terms of an axial direction (i.e., a direction parallel to a respective rotation axis) of the first roller. Alternatively, the first measurement point and the second measurement point may be at the second roller. Any or each of the first parameter and the second parameter may be or include a gap distance value, a displacement value or a load value as described above.

The system and the method disclosed herein may further comprise determining one or more further parameters at respective measurement points that are spaced apart from the first and second measurement points and spaced apart from each other. In particular, the first and second measurement points may be at the first roller, and at least two further parameters may be determined at respective measurement points at the second roller. Each of the further parameters may be or include a gap distance value or a load value as described above.

Consequently, the determining of the indicator may take into account multiple measured parameters at different measurement points. Accordingly, determining the thickness profile of the battery part may be facilitated. The accuracy of the determined thickness profile of the battery part may be increased.

In some examples, the first roller may have a substantially cylindrical shape with a lateral surface surrounding the rotation axis and extending in the direction of the rotation axis (i.e., axial direction) between two end faces. The extension between the two end faces being the axial length of the first roller. The first measurement point may be close to one of the two end faces. Alternatively or additionally, the second measurement point may be close to the other one of the two end faces.

Alternatively or additionally, the second roller may have a substantially cylindrical shape with a lateral surface surrounding the rotation axis and extending in the direction of the rotation axis (i.e., axial direction) between two end faces. The extension between the two end faces being the axial length of the second roller. The first measurement point may be close to one of the two end faces. Alternatively or additionally, the second measurement point may be close to the other one of the two end faces.

Herein, the expression "close to" may indicate that the first measurement point is directly at or in a vicinity of the one end face of the respective roller and/or that the second measurement point is directly at or in a vicinity of the other end face of the respective roller. In particular, the first measurement point may be located within a distance from the one end face that corresponds to 0 to 30%, or 0 to 20%, or 0 to 10%, or 0 to 5%, of the axial length of the respective roller. Alternatively or additionally, the second measurement point may be located within a distance from the other end face that corresponds to 0 to 30%, or 0 to 20%, or 0 to 10%, or 0 to 5%, of the axial length of the respective roller.

Consequently, information about the thickness profile of the battery part may be obtained at positions that are close to the two end faces of the first roller and/or the second roller. Considering the rigidity of the rollers, an interpolation may be performed for the area between the two end faces. Accordingly, the determination of the indicator and thus the thickness profile of the battery part may be facilitated.

In some examples, the system comprises a first load cell (which may be the load cell as described above) that is configured to monitor a first reaction force exerted by the battery part on the first roller as a reaction to being pressed by the first roller at a first measurement point. The system, or its sensor, may further include a second load cell that is configured to monitor a second reaction force exerted by the battery part on the first roller as a reaction to being pressed by the first roller at a second measurement point that is spaced apart from the first measurement point. The indicator is determined from the first reaction force and/or the second reaction force. These examples may be implemented in accordance with the above description.

In some examples, the arrangement is controlled so as to bring the indicator toward or into a target indicator range. Accordingly, the method may include controlling the arrangement of the first roller and/or the second roller such as to change the indicator toward or into the target indicator range. Similarly, the system may be configured to control the arrangement of the first roller and/or the second roller such as to change the indicator toward or into the target indicator range.

The target indicator range may include a value range, an area, or a space (if the indicator is multi-dimensional) for the indicator. If the indicator is inside the target indicator range, the thickness profile of the battery part may be within the target thickness range and/or within a threshold from the target thickness profile. As described above, the controlling of the arrangement may be performed manually and/or automatically via a feedback loop.

Consequently, the system and method disclosed herein may allow for facilitating the controlling of the arrangement of the two rollers (that is the first roller and the second roller). Furthermore, the system and method disclosed herein may provide an accurate means for obtaining a desired thickness profile of the battery part by monitoring the indicator and controlling the arrangement of the two rollers accordingly.

In some examples, the method further comprises: conveying a reference part between the first roller and the second while pressing the first roller against the second roller and/or while pressing the second roller against the first roller; and while conveying the reference part between the first roller and the second roller, determining an indicator of a reference thickness profile of the reference part. The target indicator range and/or the target thickness profile may be obtained from the reference thickness profile.

The reference part may be a sample, or a portion of a battery part that is acknowledged as acceptable. As described above, the battery part may be provided as a continuous roll of electrode substrate with an electrode active material deposited thereon. In this specific example, the reference part may be a portion of the continuous battery part that is confirmed to fulfil specific requirements.

Consequently, an indicator may be determined using the reference part as a "known good part" under the same conditions as the battery part. Hence, the target thickness range and/or the target thickness profile may be obtained in a reliable manner. The method and system may allow for facilitating and increasing accuracy and efficiency of the battery manufacturing.

In some examples, the method further comprises: applying a first pressing force to a first force application point of the first roller toward the second roller; and/or applying a second pressing force to a second force application point of the first roller toward the second roller. The second force application point is spaced away from the first force application point. The controlling of the arrangement comprises controlling the first pressing force and/or the second pressing force.

As described above, a (respective) pressing force may be applied to one or more force application points at the first roller. The method and system disclosed herein may be configured to control the arrangement by controlling the (respective) pressing force applied at the force application point(s). For example, the first pressing force may be increased to reduce a gap distance between the first roller and the second roller at the first force application point and/or the second pressing force may be increased to reduce a gap distance between the first roller and the second roller at the second force application point.

Furthermore, by controlling the first pressing force and second pressing force differently, the method and the system disclosed herein may be capable of tilting the first roller relative to the second roller, i.e., changing the inclination of the first roller relative to the second roller (i.e., the inclination between their rotation axes). In a specific example, the first roller may be tilted (pivoted) in a tilt direction by increasing the first pressing force while maintaining or reducing the second pressing force or while increasing the second pressing force to a smaller extent. Further, the first roller may be tilted (pivoted) in an opposite tilt direction by increasing the second pressing force while maintaining or reducing the first pressing force or while increasing the first pressing force to a smaller extent.

Additionally or alternatively, the described features and function principle with reference to the first roller may apply accordingly to the second roller.

Consequently, the system and method disclosed herein allows for balancing the thickness profile of the battery part by controlling the first pressing force and/or the second pressing force accordingly. This may be especially useful if the battery part, particularly an electrode active material mixture deposited on an electrode substrate, shows a thickness profile that is unbalanced along the width direction (that is parallel to the rotation axis of the first roller and/or the second roller).

In some examples, the system further comprises a first actuator and/or a second actuator. The first actuator is configured to apply a first pressing force on the first roller toward the second roller at a first force application point. The second actuator is configured to apply a second pressing force on the first roller toward the second roller at a second force application point spaced apart from the first force application point. The controlling the arrangement comprises controlling the first pressing force and/or the second pressing force.

These examples may be implemented as described above. In particular, the first actuator and/or the second actuator may be or comprise a hydraulic pressing device, a pneumatic pressing device, an electromotor or a screw rotor. The first actuator and the second actuator may be controlled together or individually in order to control the arrangement in the above-described manner.

In some examples, the controlling of the arrangement of the first roller according to the indicator is performed while conveying the battery part between the first roller and the second roller.

As described above, the method and the system disclosed herein may allow for controlling the arrangement of the first roller and/or the second roller in real-time while the battery part is being conveyed between the first roller and the second roller. Consequently, the battery manufacturing may be facilitated and become more efficient.

In some examples, the system further comprises an output device and a user interface. The output device is configured to output the thickness profile of the battery part compared to a reference thickness profile. The user interface is configured to enable a human user to manually control the arrangement.

Alternatively or additionally, the controller is configured to automatically control the arrangement so as to decrease a deviation of the indicator from a target range. This example may be implemented as described above.

Consequently, the controlling of the arrangement may be performed manually and/or automatically. The efficiency of the battery manufacturing may be increased by this flexibility. In particular, an automatic control of the arrangement with or without the possibility of manual control may increase the efficiency and accuracy as well as the quality of the battery manufacturing.

In some examples, the method further comprises: after the conveying of the battery part between the first roller and the second roller, conveying the battery part between a third roller and a fourth roller.

In some examples, the system further comprises an additional pair of rollers configured to press the battery part therebetween. The conveyor is further configured to convey the battery part from the first roller and the second roller to the additional pair of rollers. The additional pair of rollers may be the third and the fourth roller.

As discussed above, the method and the system disclosed herein allow for controlling the arrangement of the first roller and/or the second roller according to the indicator of the thickness profile of the battery part while the battery part is being conveyed between the first roller and the second roller. Consequently, the monitoring of the thickness profile of the battery part is performed at the first pair of rollers, i.e., the first roller and the second roller, without using an additional monitoring device between the first pair of rollers and a second pair rollers (i.e., the third roller and the fourth roller). This may facilitate the battery manufacturing and increase its efficiency.

### BRIEF DESCRIPTION OF THE DRAWINGS

In the following, examples of the present invention are described with reference to the accompanying drawings. In the drawings and the corresponding description, similar or identical features are referred to using like reference signs. Repetitive description of such similar or identical features will be omitted for the sake of brevity and readability.
- FIG. 1: is a flow diagram of a battery manufacturing method according to an example.
- FIG. 2: is a flow diagram of a battery manufacturing method according to an example.
- FIG. 3: is a schematic view of a battery manufacturing system according to an example.
- FIG. 4: is a schematic view of a battery manufacturing system according to an example.
- FIG. 5: is a schematic view of a battery manufacturing system according to an example.

### DETAILED DESCRIPTION OF THE DRAWINGS

Each of the examples of a battery manufacturing method and a battery manufacturing system as described below with reference to the drawings may implement or include any or some of the features described above, unless indicated otherwise or technically inappropriate. Also, a repetition of the description of features that have already been described previously will be or omitted in the following for the sake of brevity and readability.

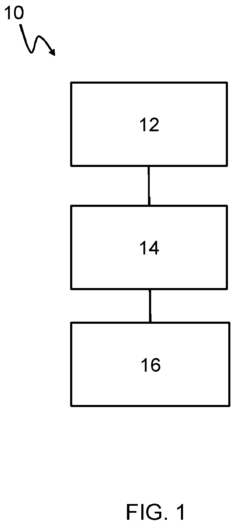

FIG. 1 shows a flow diagram of a battery manufacturing method 10. The battery manufacturing method 10 may further implement any of the features of the battery manufacturing method and the battery manufacturing system as described above. Furthermore, the battery manufacturing system disclosed herein may be configured to carry out the battery manufacturing method 10 as described with reference to FIG. 1.

The battery manufacturing method 10 comprises method steps 12, 14 and 16. At 12, a battery part is conveyed between a first roller and a second roller while pressing the first roller against the second roller and/or while pressing the second roller against the first roller. This step may be implemented as described above.

At 14, an indicator of a thickness profile of the battery part between the first roller and the second roller is determined while conveying the battery part between the first roller and the second roller, with the first roller pressing against the second roller and/or the second roller pressing against the first roller. This step may be implemented as described above.

At 16, an arrangement of the first roller and/or the second roller is controlled according to the indicator. This step may be implemented as described above.

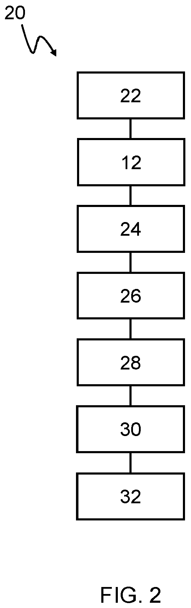

FIG. 2 shows a flow diagram of a battery manufacturing method 20. The battery manufacturing method 20 may further implement any of the features of the battery manufacturing method and the battery manufacturing system as described above. Furthermore, the battery manufacturing system disclosed herein may be configured to carry out the battery manufacturing method 20 as described with reference to FIG. 1.

The battery manufacturing method 20 comprises the step 12 as described above. In addition, the battery manufacturing method 20 comprises method steps 22, 24, 26, 28, 30 and 32.

At 22, a reference part is conveyed between the first roller and the second while pressing the first roller against the second roller and/or while pressing the second roller against the first roller. While conveying the reference part between the first roller and the second roller, an indicator of a reference thickness profile of the reference part is determined. The target indicator range is obtained from the reference thickness profile.

Then the step 12 is performed as described above.

At 24, a first parameter is determined at a first measurement point and a second parameter is determined at a second measurement point, wherein the second measurement point that is spaced apart from the first measurement point. This step may be implemented as described above.

At 26, an indicator of a thickness profile of the battery part between the first roller and the second roller is determined while conveying the battery part between the first roller and the second roller, with the first roller pressing against the second roller and/or the second roller pressing against the first roller. The indicator is determined from the first parameter and/or the second parameter. This step may be implemented as described above.

At 28, a first pressing force is applied to a first force application point of the first roller toward the second roller. Alternatively or additionally, a second pressing force is applied to a second force application point of the first roller toward the second roller. The second force application point is spaced away from the first force application point. In particular, the first force application point may correspond to the first measurement point. The second force application point may correspond to the second measurement point.

At 30, an arrangement of the first roller and/or the second roller is controlled according to the indicator. The controlling the arrangement comprises controlling the first pressing force and/or the second pressing force. This step may be implemented as described above.

At 32, after the conveying the battery part between the first roller and the second roller, conveying the battery part between a third roller and a fourth roller. This step may be implemented as described above.

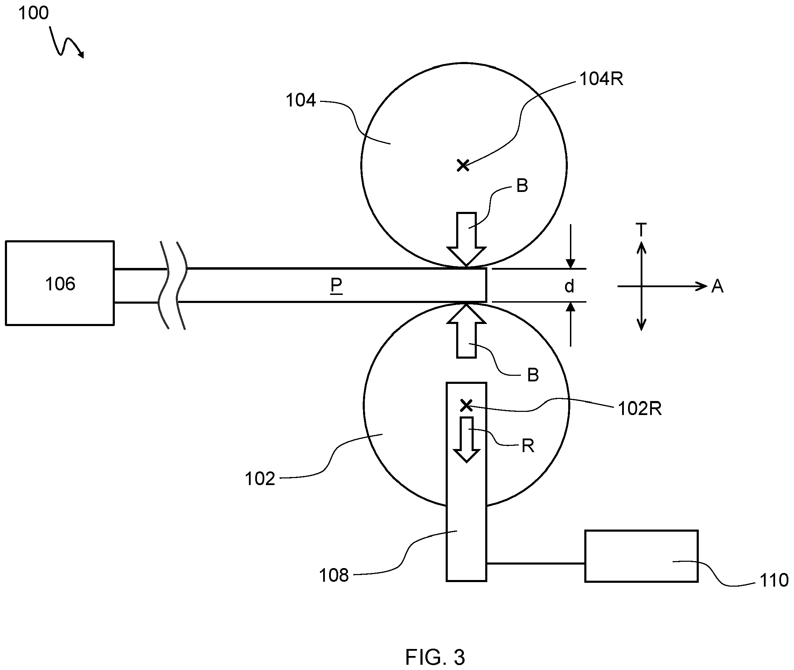

FIG. 3 schematically shows a battery manufacturing system 100. The battery manufacturing system 100 has a first roller 102, a second roller 104, a transport device 106, a sensor 108 and a controller 110. Each of the components 102 to 110 may be implemented as described above.

The first roller 102 is rotatable around a first rotation axis 102R. The second roller 104 is rotatable around a second rotation axis 104R. The first roller 102 and the second roller 104 are arranged such that the first rotation axis 102R and the second rotation axis 104R are inclined from each other within a threshold inclination as described above.

The first roller 102 is configured to be pressed against the second roller 104(schematically symbolized by arrows B). Alternatively or additionally, the second roller 104 is configured to be pressed against the first roller 102. In FIG. 3, the pressing by the first roller 102 and the second roller 104 is schematically shown by arrows D. The first roller 102 and the second roller 104 may be implemented as described above. The pressing by the first roller 102 and the second roller 104 may be as described above.

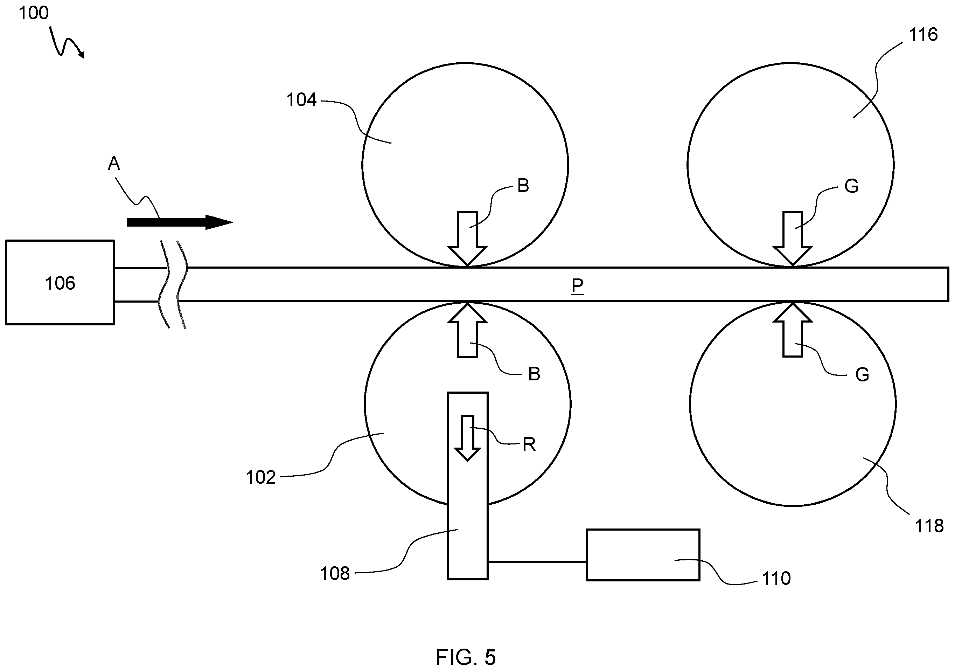

The transport device 106, shown only schematically in FIG. 3 and FIG. 5, is configured to convey a battery part P between the first roller 102 and the second roller 104. The conveying of the battery part P by the transport 106 is schematically depicted by arrow A. The arrow A may also indicate a processing direction A of the battery part P, and may also be referred to as a battery manufacturing processing direction A.

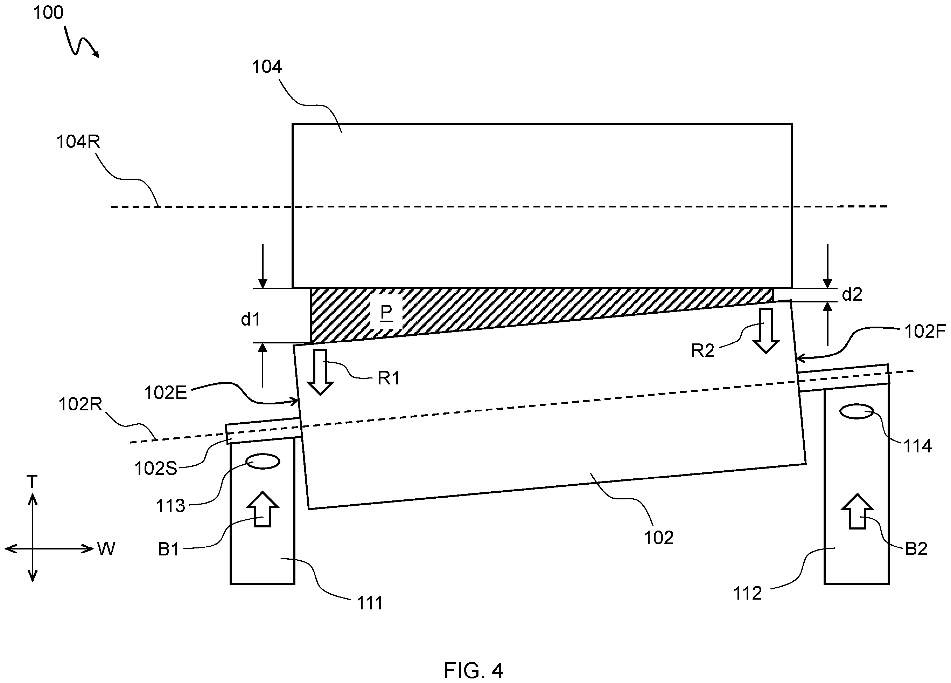

The sensor 108 is configured to determine an indicator of a thickness profile of the battery part P between the first roller 102 and the second roller 104. The thickness of the battery part P may be determined in a direction perpendicular to the processing direction A and perpendicular to a width direction (not shown in FIG. 3, see FIG. 4). The width direction may be coplanar with the rotation axis 102R of the first roller 102 and/or with the rotation axis 104R of the second roller 104. The sensor 108 may be implemented as described above.

The indicator of the thickness profile of the battery part P, shortly referred to as the indicator, includes one or more parameters related to a reaction force R exerted by the battery part P in response to being pressed by the first roller 102 and/or the second roller 104 while being conveyed therebetween. Additionally or alternatively, the indicator includes one or more parameters related to a gap distance d between the first roller 102 and the second roller 104 while being conveyed therebetween. The sensor 108 may be configured to determine a load value corresponding to the reaction force R and/or a gap distance value (or a displacement value, as described above) corresponding to the gap distance d. The indicator may be implemented as described above. In particular, the indicator may include two or more parameters measured or determined at respective two or more measurement points, as described above.

The controller 110 is configured to control an arrangement of the first roller 102 and/or the second roller 104 according to the indicator. The arrangement of the first roller is or includes an inclination of the rotation axis 102R of the first roller 102 from the rotation axis 104R of the second roller 104. In other words, the arrangement of the first roller is or includes an inclination between the rotation axes 102R, 104R of the first roller 102 and the second roller 104. The arrangement may be implemented as described above.

The controlling of the arrangement may be implemented as described above. In particular, the controller 110 may control the arrangement in a manner described above.

FIG. 4 schematically shows a battery manufacturing system 100. FIG. 3 and FIG. 4 may be considered as a side view and a front view, respectively, of the same battery manufacturing system 100, under the assumption that FIG. 4 shows a particular operation situation where the battery part P has an unbalanced thickness profile along the width direction W. The battery part P may be as described above. In particular, the battery part P may include an electrode substrate and an electrode active material mixture as described above.

In the battery manufacturing system 100 of FIG. 4, the second roller 104 is stationary, i.e., arranged in a fixed manner so that the rotation axis 104R of the second roller 104 does not change during operation. The first roller 102 is arranged flexibly so that a reaction force R1, R2 exerted by the battery part P in response to being pressed by the first roller 102 and/or the second roller 104 may push the first roller 102 in a direction opposite to the second roller 104.

The first roller 102 has a cylindrical shape around the rotation axis 102R and extends between two end faces 102E and 102F in the axial direction. The end faces 102E and 102F are each extend parallel to a radial direction and a circumferential direction of the first roller 102. The end faces 102E and 102F of the first roller 102 are perpendicular to the rotation axis 102R and the axial direction of the first roller 102.

The battery part P may have an unbalanced thickness profile as shown in FIG. 4. Such an unbalanced thickness profile may be considered outside of a threshold from a target thickness profile. The example shown in FIG. 4 is not true to scale and the unbalanced thickness profile of the battery part P is depicted in a greatly exaggerated manner to highlight the inventive concept. The unbalanced thickness profile of the battery part P may be due to an anomaly, a defect, a random fluctuation, a process failure or any other effect that may occur during the battery manufacturing process.

Without loss of generality, the unbalanced thickness profile of the battery part P as shown in FIG. 4 is such that a first gap distance d1 close to (near) the end face 102E of the first roller 102 is larger than a second gap distance d2 close to (near) the end face 102F of the first roller 102. Accordingly, a non-zero inclination between the rotation axis 102R of the first roller 102 and the rotation axis 104R of the second roller 104 occurs.

The unbalanced thickness profile of the battery part P further results in that a reaction force R1 close to the first end face 102E being different from a reaction force R2 close to the second end face 102F. In the example of FIG. 4, the first reaction force R1 may be greater than the second reaction force R2 because the thickness of the battery part P is greater near the first end face 102E than the thickness near the second end face 102F.

The first roller 102 comprises a shaft 102S, which alternatively may be an axis 102S, extending parallel to the rotation axis 102R. In the following, the component 102S is referred to as a shaft 102S without excluding the option of being an axis 102S instead. The shaft 102S protrudes from the first end face 102E and from the second end face 102F of the first roller 102.

The shaft 102S is supported by a first actuator 111 in a first position close to the first end face 102E of the first roller 102. The shaft 102S is supported by a second actuator 112 in a second position close to the second end face 102F of the first roller 102. The first actuator 111 is combined with a first load cell 113 configured to measure a load acting on the first actuator 111. The second actuator 112 is combined with a second load cell 114 configured to measure a load acting on the second actuator 112. In addition, the load values measured by the load cells 113, 114 may be used to compute a respective displacement value from a reference or initial position as described above.

In the example of FIG. 4, the first reaction force R1 acting on the first actuator 111 may be larger than the second reaction force R2 acting on the second actuator 112. Hence, a load value measured by the first load cell 113 may be larger than a load value measured by the second load cell 114. This may be a hint for an operator or for the system indicating that the thickness profile of the battery part P is unbalanced.

In order to balance the thickness profile of the battery part P, a pressing force B1 applied by the first actuator 111 to the first roller 102, namely to a first force application point thereof, may be increased. At the same time, a pressing force B2 applied by the second actuator 112 to the first roller 102, namely to a second force application point thereof, may be maintained, decreased or increased to a smaller extent. In this manner, the first gap d1 may be reduced while maintaining or decreasing the second gap d2 or increasing the second gap d2 but to a smaller extent.

Furthermore, in terms of the width direction W, the first force application point may correspond to a first measurement point where the first load value is measured by the first load cell 113. In terms of the width direction W, the second force application point may correspond to a second measurement point where the second load value is measured by the second load cell 114.

In addition, if any of the first gap distance d1 and the second gap distance d2 is outside of a target range, it is considered that the thickness profile of the battery part P is outside of a target thickness range. In this case, the first actuator 111 and/or the second actuator 112 may be controlled so that the gap distance d1 and d2 are moved toward or into the target range.

In addition, an axial length of the first roller 102 may be parameterized. The measured load values may be combined with a respective position in terms of the axial length of the first roller 102 and displayed as a plot against the parameterized axial length of the first roller 102. Such a display may facilitate the control of the arrangement of the first roller 102.

FIG. 5 schematically shows a battery manufacturing system 100. In addition to the components and the respective features described above, the example of FIG. 5 comprises an additional pair of rollers 116, 118 to press against the battery part P (schematically symbolized by arrows G) as it is conveyed therebetween by the transport device 106. The additional pair of rollers 116, 118 may be implemented as described above.

As discussed above, the battery manufacturing system 100 as shown in FIG. 5 may allow for controlling the arrangement of the first roller 102 according to the indicator, that may be or include one or more gap distance values and/or one or more load values, of the thickness profile of the battery part P while being conveyed between the first roller 102 and the second roller 104. Consequently, the monitoring of the thickness profile of the battery part P is performed at the first roller 102 and the second roller 104, without using an additional monitoring device upstream of the additional pair of rollers (i.e., the third roller 116 and the fourth roller 118).

### LIST OF REFERENCE SIGNS

- 100: battery manufacturing system
- 102: first roller
- 102E, F: end face
- 102R: first rotation axis
- 102S: shaft
- 104: second roller
- 104R: second rotation axis
- 106: transport device
- 108: sensor
- 110: controller
- 111, 112: actuator
- 113, 114: load cell
- 116: third roller
- 118: fourth roller
- A: processing direction
- B, B1, B2: pressing force
- d1, d2: gap distance
- P: battery part
- R, R1, R2: reaction force

## Claims

**1.** A battery manufacturing method, comprising:
conveying a battery part between a first roller and a second roller while pressing the first roller against the second roller and/or while pressing the second roller against the first roller;
during the conveying, determining an indicator of a thickness profile of the battery part between the first roller and the second roller; and
controlling an arrangement of the first roller and/or the second roller according to the indicator.

**2.** The battery manufacturing method of claim 1,
wherein the indicator is or comprises or is determined from a load measuring a reaction force exerted by the battery part on the first roller in response to being pressed by the first roller and/or the second roller.

**3.** The battery manufacturing method of any one of the preceding claims, further comprising:
determining a first parameter at a first measurement point; and
determining a second parameter at a second measurement point that is spaced apart from the first measurement point,
wherein the indicator is determined from the first parameter and/or the second parameter.

**4.** The battery manufacturing method of claim 3,
wherein the first measurement point is close to one end face of the first roller; and/or
wherein the second measurement point is close to another end face of the first roller that is opposite to the one end face of the first roller.

**5.** The battery manufacturing method of any one of the preceding claims, wherein the arrangement is controlled so as to bring the indicator toward or into a target indicator range.

**6.** The battery manufacturing method of claim 5, further comprising:
conveying a reference part between the first roller and the second while pressing the first roller against the second roller and/or while pressing the second roller against the first roller; and
while conveying the reference part between the first roller and the second roller, determining an indicator of a reference thickness profile of the reference part,
wherein the target indicator range is obtained from the reference thickness profile.

**7.** The battery manufacturing method of any one of the preceding claims, further comprising:
applying a first pressing force to a first force application point of the first roller toward the second roller; and/or
applying a second pressing force to a second force application point of the first roller toward the second roller,
wherein the second force application point is spaced away from the first force application point,
wherein the controlling the arrangement comprises controlling the first pressing force and/or the second pressing force.

**8.** The battery manufacturing method of any one of the preceding claims,
wherein the controlling the arrangement of the first roller according to the indicator is performed while conveying the battery part between the first roller and the second roller.

**9.** The battery manufacturing method of any one of the preceding claims, further comprising:
after the conveying the battery part between the first roller and the second roller, conveying the battery part between a third roller and a fourth roller.

**10.** A battery manufacturing system, comprising:
a first roller rotatable around a first rotation axis;
a second roller rotatable around a second rotation axis, wherein the first roller and the second roller are arranged such that the first rotation axis and the second rotation axis are inclined from each other within a threshold inclination, wherein the first roller is configured to be pressed against the second roller and/or the second roller is configured to be pressed against the first roller;
a transport device configured to convey a battery part between the first roller and the second roller;
a sensor configured to determine an indicator of a thickness profile of the battery part between the first roller and the second roller; and
a controller configured to control an arrangement of the first roller and/or the second roller according to the indicator.

**11.** The battery manufacturing system of claim 10,
wherein the sensor includes a load cell configured to monitor a reaction force exerted by the battery part on the first roller as a reaction to being pressed by the first roller and/or the second roller.

**12.** The battery manufacturing system of claim 11,
wherein the load cell is a first load cell that is configured to monitor a first reaction force exerted by the battery part on the first roller as a reaction to being pressed by the first roller at a first measurement point,
wherein the sensor further includes a second load cell that is configured to monitor a second reaction force exerted by the battery part on the first roller as a reaction to being pressed by the first roller at a second measurement point that is spaced apart from the first measurement point,
wherein the indicator is determined from the first reaction force and/or the second reaction force.

**13.** The battery manufacturing system of any of claims 10 to 12, further comprising:
a first actuator configured to apply a first pressing force on the first roller toward the second roller at a first force application point; and/or
a second actuator configured to apply a second pressing force on the first roller toward the second roller at a second force application point spaced apart from the first force application point,
wherein the controlling the arrangement comprises controlling the first pressing force and/or the second pressing force.

**14.** The battery manufacturing system of any of the claims 10 to 13, further comprising:
an additional pair of rollers configured to press the battery part therebetween,
wherein the conveyor is further configured to convey the battery part from the first roller and the second roller to the additional pair of rollers.

**16.** An automated plant, particularly a smart factory,
wherein the automated plant is configured to execute the method of any one of claims 1 to 9, and/or
wherein the automated plant comprises a battery manufacturing system of any one of claims 10 to 14.

## Amended claims

### Amended claims in accordance with Rule 137(2) EPC.

**1.** A battery manufacturing method, comprising:
conveying a battery part (P) between a first roller (102) and a second roller (104) while pressing the first roller (102) against the second roller (104) and/or while pressing the second roller (104) against the first roller (102);
during the conveying, determining an indicator of a thickness profile of the battery part (P) between the first roller (102) and the second roller (104); and
controlling an arrangement of the first roller (102) and/or the second roller (104) according to the indicator.

**2.** The battery manufacturing method of claim 1,
wherein the indicator is or comprises or is determined from a load measuring a reaction force (R, R1, R2) exerted by the battery part (P) on the first roller (102) in response to being pressed by the first roller (102) and/or the second roller (104).

**3.** The battery manufacturing method of any one of the preceding claims, further comprising:
determining a first parameter at a first measurement point; and
determining a second parameter at a second measurement point that is spaced apart from the first measurement point,
wherein the indicator is determined from the first parameter and/or the second parameter.

**4.** The battery manufacturing method of claim 3,
wherein the first measurement point is close to one end face (102E) of the first roller (102); and/or
wherein the second measurement point is close to another end face (102F) of the first roller (102) that is opposite to the one end face (102E) of the first roller (102).

**5.** The battery manufacturing method of any one of the preceding claims, wherein the arrangement is controlled so as to bring the indicator toward or into a target indicator range.

**6.** The battery manufacturing method of claim 5, further comprising:
conveying a reference part between the first roller (102) and the second (104) while pressing the first roller (102) against the second roller (104) and/or while pressing the second roller (104) against the first roller (102); and
while conveying the reference part between the first roller (102) and the second roller (104), determining an indicator of a reference thickness profile of the reference part, wherein the target indicator range is obtained from the reference thickness profile.

**7.** The battery manufacturing method of any one of the preceding claims, further comprising:
applying a first pressing force (B1) to a first force application point of the first roller (102) toward the second roller (104); and/or
applying a second pressing force (B2) to a second force application point of the first roller (102) toward the second roller (104),
wherein the second force application point is spaced away from the first force application point,
wherein the controlling the arrangement comprises controlling the first pressing force (B1) and/or the second pressing force (B2).

**8.** The battery manufacturing method of any one of the preceding claims,
wherein the controlling the arrangement of the first roller (102) according to the indicator is performed while conveying the battery part (P) between the first roller (102) and the second roller (104).

**9.** The battery manufacturing method of any one of the preceding claims, further comprising:
after the conveying the battery part (P) between the first roller (102) and the second roller (104), conveying the battery part (P) between a third roller (116) and a fourth roller (118).

**10.** A battery manufacturing system (100), comprising:
a first roller (102) rotatable around a first rotation axis (102R);
a second roller (104) rotatable around a second rotation axis (104R), wherein the first roller (102) and the second roller (104) are arranged such that the first rotation axis (102R) and the second rotation axis (104R) are inclined from each other within a threshold inclination, wherein the first roller (102) is configured to be pressed against the second roller (104) and/or the second roller (104) is configured to be pressed against the first roller (102);
a transport device (106) configured to convey a battery part (P) between the first roller (102) and the second roller (104);
a sensor (108) configured to determine an indicator of a thickness profile of the battery part (P) between the first roller (102) and the second roller (104); and
a controller (110) configured to control an arrangement of the first roller (102) and/or the second roller (104) according to the indicator.

**11.** The battery manufacturing system (100) of claim 10,
wherein the sensor (108) includes a load cell (113, 114) configured to monitor a reaction force (R, R1, R2) exerted by the battery part (P) on the first roller (102) as a reaction to being pressed by the first roller (102) and/or the second roller (104).

**12.** The battery manufacturing system (100) of claim 11,
wherein the load cell (113, 114) is a first load cell (113) that is configured to monitor a first reaction force (R1) exerted by the battery part (P) on the first roller (102) as a reaction to being pressed by the first roller (102) at a first measurement point,
wherein the sensor (108) further includes a second load cell (114) that is configured to monitor a second reaction force (R2) exerted by the battery part (P) on the first roller (102) as a reaction to being pressed by the first roller (102) at a second measurement point that is spaced apart from the first measurement point,
wherein the indicator is determined from the first reaction force (R1) and/or the second reaction force (R2).

**13.** The battery manufacturing system (100) of any of claims 10 to 12, further comprising:
a first actuator (111) configured to apply a first pressing force (B1) on the first roller (102) toward the second roller (104) at a first force application point; and/or
a second actuator (112) configured to apply a second pressing force (B2) on the first roller (102) toward the second roller (104) at a second force application point spaced apart from the first force application point,
wherein the controlling the arrangement comprises controlling the first pressing force (B1) and/or the second pressing force (B2).

**14.** The battery manufacturing system (100) of any of the claims 10 to 13, further comprising:
an additional pair of rollers (116, 118) configured to press the battery part (P) therebetween,
wherein the conveyor is further configured to convey the battery part (P) from the first roller (102) and the second roller (104) to the additional pair of rollers (116, 118).

**16.** An automated plant, particularly a smart factory,
wherein the automated plant is configured to execute the method of any one of claims 1 to 9, and/or
wherein the automated plant comprises a battery manufacturing system (100) of any one of claims 10 to 14.
